# EUROPÄISCHE PATENTSCHRIFT

(11) **EP 2 496 853 B1**
(45) Veröffentlichungstag und Bekanntmachung des Hinweises auf die Patenterteilung: **27.01.2016**
(21) Anmeldenummer: 10784439.1
(22) Anmeldetag: 03.11.2010
(51) Int. Cl.: F16D 3/74

(54) **GUMMIMISCHUNG FÜR ELASTISCHE KUPPLUNG**
RUBBER MIXTURE FOR AN ELASTIC COUPLING
MÉLANGE DE CAOUTCHOUC POUR ACCOUPLEMENT ÉLASTIQUE

(30) Priorität: 03.11.2009 DE 102009051778
(43) Veröffentlichungstag der Anmeldung: 12.09.2012
(73) Patentinhaber: Hackforth GmbH, 44653 Herne (DE)
(72) Erfinder: BAUERMEISTER, Ralf, 45701 Herten (DE)
(74) Vertreter: Isfort, Olaf
(86) Internationale Anmeldenummer: PCT/EP2010/006695
(87) Internationale Veröffentlichungsnummer: WO 2011/054499

(56) Entgegenhaltungen:
- EP-A1- 2 028 224
- WO-A2-99/66223
- DE-A1- 4 422 048
- DE-A1- 19 922 639

## Beschreibung

Die Erfindung betrifft eine elastische Kupplung mit antriebs- und abtriebsseitigen Anschlussflanschen und mindestens einem zwischen diesen angeordneten Gummikörper.

Elastische Kupplungen sind aus dem Stand der Technik, wie z.B. aus DE 199 55 051 A1, bekannt. Diese Kupplungen sind mit elastischen Gummikörpern ausgestattet, welche zumeist aus verschiedenen Kautschukkomponenten, Ruß und weiteren Zusatzstoffen sowie Weichmachern bestehen. Der Gummikörper wird zur Erzielung dauerelastischer Eigenschaften jeweils vulkanisiert und dadurch gleichzeitig mit den antriebs- und abtriebsseitigen Kupplungsflanschen verbunden. Die Bestandteile werden so aufeinander abgestimmt, dass sich ein optimales Verhalten gegenüber den an der Kupplung angreifenden Kräften ergibt. Zu diesen Kräften zählen insbesondere die Scher- bzw. Torsionskräfte, welche an den gegenüberliegenden Anschlussflanschen der Kupplung angreifen und damit den Gummikörper belasten.

Die Druckschrift DE 44 22 048 A1 offenbart eine drehelastische Kupplung aus peroxidisch vernetztem Silikon-Kautschuk, welche sich insbesondere durch eine hohe Temperaturstabilität, bessere Resistenz gegen Alterung und eine erhöhte Belastbarkeit auszeichnet. Als aktiver Füllstoff wird, wie meist bei dynamisch belasteten Silikonelastomeren, Silika verwendet. Der Einsatz von Ruß würde hingegen eine deutlich geringere Verstärkung bewirken.

Die Druckschrift WO 99/66223 A2 zeigt eine aus drei Hauptkomponenten aufgebaute axial steckbare elastische Kupplung mit zwei Anschlussflanschen und einem zwischen diesen angeordneten Gummikörper, wobei der Gummikörper Silika und Ruß als Füllstoff sowie Farbpigmente enthält und eine gute mechanische Festigkeit aufweist.

Die Druckschrift DE 199 22 639 A1 zeigt ein Verfahren zur Herstellung von Mischungen aus silylgruppenhaltigen, insbesondere siliziumhaltigen Kautschuken und Füllstoffen für abriebbeständige Formkörper wie z.B. Reifen, wobei oxidische und/oder silikatische Füllstoffe eingesetzt werden können, um den Mischaufwand zu verringern, indem die oxidischen und/oder silikatischen Füllstoffe in eine Kautschuklösung eingearbeitet werden und während oder nach dem Vermischen des gelösten Kautschuks mit dem Füllstoff das Lösungsmittel wieder entfernt wird.

Ausgehend vom genannten Stand der Technik ist es wünschenswert, bei elastischen Kupplungen mit Gummikörpern aus Naturkautschuk und/oder Polyisopren eine Verbesserung der Belastbarkeit zu erreichen.

Es ist daher Aufgabe der Erfindung, eine elastische Kupplung bereitzustellen, deren Gummikörper verbesserte mechanische Eigenschaften aufweist.

Zur Lösung dieser Aufgabe schlägt die Erfindung vor, dass der mindestens eine Gummikörper
- statt Ruß Kieselsäure/Silika als Füllstoff
- Farbpigmente und
- weniger als 5 % Ruß bezogen auf die Gesamtmasse des Gummikörpers enthält,
wobei der Grundkörper 20-90% Kieselsäure/Silika bezogen auf die Gesamtmasse des Gummikörpers enthält, der Grundkörper Kieselsäure/Silika in Form von Partikeln enthält und die Kieselsäure/Silika-Partikel wenigstens zum Teil silanisiert sind.

Die Erfindung zeichnet sich dadurch aus, dass bei der Herstellung des Gummikörpers zwar an der Verwendung von konventionell schwefelvernetztem Kautschukmaterial, nämlich bevorzugt Naturkautschuk oder Polyisopren, festgehalten wird, als Füllstoff allerdings statt Ruß Kieselsäure bzw. Silika verwendet wird. Es zeigt sich, dass dadurch die mechanischen Eigenschaften der Kupplung, wie z.B. die Weiterreißfestigkeit des Gummikörpers, signifikant verbessert werden können.

Hierbei wird als Füllstoff partikuläres, silanisiertes Silika/Kieselsäure-Material verwendet. Dadurch ergibt sich der Vorteil, dass die Zugfestigkeit und die Bruchdehnung erhöht und der Druckverformungsrest (DVR) erniedrigt werden.

Ein weiterer Vorteil ist, dass auch die Farbe des Gummikörpers variiert werden kann. Bisher ist die Farbe stets schwarz, da die bei elastischen Kupplungen bisher eingesetzten Gummimischungen aus Naturkautschuk grundsätzlich Ruß als Füllstoff enthalten. Eine Einfärbung war nicht vorgesehen.

Kieselsäure/Silika ist also zum einen geeignet, den Weiterreißwiderstand des gefüllten Gummimaterials gegenüber mit Ruß gefülltem Gummimaterial zu verbessern, zum anderen ist der erfindungsgemäße Füllstoff farblos und ermöglicht so die Verwendung von Farbpigmenten. Die Einfärbung des Gummimaterials kann genutzt werden, um die jeweiligen mechanischen Eigenschaften oder die spezielle Auslegung der Kupplung (übertragbares Drehmoment, übertragbare Leistung etc.) zu kennzeichnen.

Eine Ausführungsvariante der elastischen Kupplung sieht vor, dass die Kieselsäure homogen in dem Gummikörper verteilt ist. Bei dieser Variante ergeben sich gleichartige Materialeigenschaften über das ganze Volumen des Gummikörpers.

Eine Variante sieht vor, dass die Farbpigmente homogen in der Gummimischung verteilt sind. Dies ist insbesondere herstellungstechnisch die einfachste Variante.

Gemäß der Erfindung enthält der Gummikörper 20-90 % Kieselsäure/Silika bezogen auf die Gesamtmasse des Gummikörpers.

Besonders bevorzugt sollte die Gummimischung überhaupt keinen Ruß, jedenfalls aber weniger als 1 % Ruß enthalten, um eine optimale Einfärbbarkeit des Gummikörpers zu erhalten.

Die erfindungsgemäße Kupplung kann darüber hinaus mit gebräuchlichen Zusatzstoffen, wie z.B. Hitzestabilisatoren, kombiniert werden.

## Patentansprüche

1. Elastische Kupplung mit antriebs- und abtriebsseitigen Anschlussflanschen und mindestens einem zwischen diesen angeordneten Gummikörper,
**dadurch gekennzeichnet, dass** der mindestens eine Gummikörper
- statt Ruß Kieselsäure/Silika als Füllstoff,
- Farbpigmente und
- weniger als 5 % Ruß bezogen auf die Gesamtmasse des Gummikörpers enthält,
wobei der Gummikörper 20-90 % Kieselsäure/Silika bezogen auf die Gesamtmasse des Gummikörpers enthält, der Grundkörper Kieselsäure/Silika in Form von Partikeln enthält und die Kieselsäure/Silika-Partikel wenigstens zum Teil silanisiert sind.

2. Elastische Kupplung nach Anspruch 1, **dadurch gekennzeichnet, dass** der Gummikörper aus Naturkautschuk und/oder Polyisopren hergestellt ist.

3. Elastische Kupplung nach Anspruch 2, **dadurch gekennzeichnet, dass** der Gummikörper durch Schwefelvulkanisation hergestellt ist.

4. Elastische Kupplung nach einem der Ansprüche 1 bis 3, **dadurch gekennzeichnet, dass** die Kieselsäure/Silika-Partikel homogen in dem Gummikörper verteilt sind.

5. Elastische Kupplung nach einem der Ansprüche 1 bis 4, **dadurch gekennzeichnet, dass** die Farbpigmente homogen in dem Gummikörper verteilt sind.

## Claims

1. Elastic coupling comprised of connecting flanges located on the drive input and drive output side and comprised of at least one rubber body arranged between them,
**characterized in that**, the at least one rubber body contains
- silicic acid/silica instead of carbon black as filler agent,
- dyeing pigments and
- less than 5 % carbon black relative to the total mass of the rubber body,
wherein the rubber body contains 20-90 % silicic acid/silica relative to the total mass of the rubber body, the rubber body contains silicic acid/silica in form of particles and the silicic acid/silica particles are at least partly silanized.

2. Elastic coupling according to claim 1, **characterized in that** the rubber body is made of natural caoutchouc and/or polyisoprene.

3. Elastic coupling according to claim 2, **characterized in that** the rubber body is manufactured by sulfur vulcanization.

4. Elastic coupling according to any of the preceding claims 1 to 3, **characterized in that** the silicic acid/silica particles are homogeneously distributed in the rubber body.

5. Elastic coupling according to any of the preceding claims 1 to 4, **characterized in that** the dyeing pigments are homogeneously distributed in the rubber body.

## Revendications

1. Accouplement élastique comprenant des brides de raccordement côté entrée et côté sortie, ainsi qu'au moins un corps en caoutchouc placé entre celles-ci ;
**caractérisé en ce que** le au moins un corps en caoutchouc contient
- de l'acide silicique/de la silice de noir de carbone en guise de charge,
- des pigments colorants, et
- moins de 5 % de suie par rapport à la masse totale du corps en caoutchouc,
dans lequel le corps en caoutchouc contient 20 à 90 % d'acide silicique/de silice par rapport à la masse totale du corps en caoutchouc, le corps en caoutchouc contient de l'acide silicique/de la silice sous forme de particules, et les particules d'acide silicique/de silice sont au moins partiellement silanisées.

2. Accouplement élastique selon la revendication 1, **caractérisé en ce que** le corps en caoutchouc est fabriqué à partir de caoutchouc naturel et/ou de polyisoprène.

3. Accouplement élastique selon la revendication 2, **caractérisé en ce que** le corps en caoutchouc est fabriqué par vulcanisation au souffre.

4. Accouplement élastique selon l'une quelconque des revendications 1 à 3, **caractérisé en ce que** les particules d'acide silicique/de silice sont réparties de manière homogène dans le corps en caoutchouc.

5. Accouplement élastique selon l'une quelconque des revendications 1 à 4, **caractérisé en ce que** les pigments colorants sont répartis de manière homogène dans le corps en caoutchouc.
